# EUROPEAN PATENT APPLICATION

(11) **EP 4 706 361 A1**
(43) Date of publication of application: **11.03.2026**
(21) Application number: 25191320.8
(22) Date of filing: 23.07.2025
(51) Int. Cl.: A01B 69/04, G06V 20/56, A01B 69/00

(54) **AGRICULTURAL ANOMALY DETECTION AND VALIDATION SYSTEMS, AND RELATED SYSTEMS, METHODS, AND AGRICULTURAL VEHICLES**

(30) Priority: 09.09.2024 GB 202413241
(71) Applicant: AGCO International GmbH, 8212 Neuhausen am Rheinfall (CH)
(72) Inventor: MUJKIC, Esma, 8930 Randers (DK); CHRISTIANSEN, Martin Peter, 8930 Randers (DK)
(74) Representative: AGCO Intellectual Property Department

(57) **Abstract**

A method of validating detected anomalies in an agricultural field includes gathering sensor data with one or more cameras, LiDAR units, and radar units and generating predicted anomalies based on the sensor data by applying an anomaly detection deep neural network to the sensor data. Sensor data is gathered at a second time and predicted anomalies are determined by applying the anomaly detection deep neural network to the sensor data acquired at the second time. The predicted anomalies at the second time is compared to the predicted anomalies at the first time to validate the predicted anomalies and generated a validated anomaly map. Related agricultural machines and systems are also disclosed.

## Description

### CROSS-REFERENCE TO RELATED APPLICATION

### FIELD

Embodiments of the present disclosure relate generally to methods and systems including an anomaly detection and validation system for generating and validated an anomaly map of an agricultural field. Embodiments of the present disclosure further relate to controlling operations of the agricultural vehicle in the agricultural field based on the validated anomalies, and to related systems and methods.

### BACKGROUND

In the field of agriculture, agricultural vehicles such as tractors, harvesters, and other specialized equipment are commonly used to perform various tasks in broad acre fields. It has become increasingly common for these types of agricultural vehicles to feature automated driving and/or safety systems that rely on data from various sensors mounted to the agricultural vehicle to automatically move the agricultural vehicle through a field or other similar environment. These vehicles, however, often operate in complex and dynamic agricultural environments where anomalies may be present. For example, anomalies in an agricultural setting may include stones, non-standard structures, misplaced objects, power poles, trees, buildings, bodies of water, human bystanders, animals, and more.

Some systems include anomaly detection features that rely on data from LiDAR units, GNSS units, and/or radar units. While these anomaly detectors can provide some information about the environment surrounding an agricultural vehicle, they generally have limitations in terms of accuracy, cost, and complexity. Additionally, such anomaly detectors are often poorly suited for detecting many of the types of anomalies commonly present in agricultural settings such as, small objects, thin obstacles, or irregularly shaped features.

In some instances, anomaly detectors have been proposed that incorporate camera-based features to compensate for the shortcomings of other sensor-based systems. Camera-based anomaly detectors can capture rich visual information in a more cost-effective way. Despite this, existing camera-based systems for anomaly detection typically suffer from several issues, such as difficulty in handling varying lighting conditions, occlusions, and clutter in images. Moreover, many of these camera-based systems rely on traditional image processing techniques or simple machine learning models, which typically fail to robustly and accurately detect a wide range of anomalies in complex agricultural settings.

These shortcomings are further compounded by inaccurate or incorrect anomaly predictions and/or by the failure to identify an anomaly. Failure to accurately predict an anomaly may lead to damage to the agricultural vehicle and agricultural equipment, the operator of the agricultural vehicle, crops being worked by the agricultural vehicle, and/or objects, animals, or people in the field worked by the agricultural vehicle and agricultural equipment. Further, mischaracterization of an object as an anomaly may lead to the inefficient operation of the agricultural vehicle and agricultural equipment, as well as the inefficient working of the field.

### BRIEF SUMMARY

According to embodiment described herein, a method of operating an agricultural vehicle includes at a first time, receiving global navigation satellite system data from one or more global navigation satellite system units coupled to an unmanned aerial vehicle traveling above an agricultural field, at the first time, receiving first sensor data of the agricultural field from one or more first sensors coupled to the unmanned aerial vehicle, synchronizing the first sensor data across one or more global navigation satellite system time references, and applying an anomaly detection deep neural network to the synchronized first sensor data to generate first predicted anomaly data. The method further includes, at a second time, receiving second sensor data of the agricultural field from the one or more first sensors or from one or more second sensors coupled to the agricultural vehicle, applying the anomaly deep neural network to the second sensor data to generate second predicted anomaly data, and validating the first predicted anomaly data with the second predicted anomaly data to generate at least one of validated anomalies or a validated anomaly map.

In some embodiments, the method further includes controlling one or more operations of the agricultural vehicle based on the at least one of validated anomalies or a validated anomaly map.

Controlling one or more operations of the agricultural vehicle may include one or more of causing the agricultural vehicle to stop moving in the agricultural field, causing the agricultural vehicle to slow down in the agricultural field, causing the agricultural vehicle to deviate from a pre-planned route in the agricultural field, causing the agricultural vehicle to halt operating a front implement of the agricultural vehicle or a rear implement of the agricultural vehicle, causing the agricultural vehicle to use an onboard signal tower to highlight one or more of the validated anomalies, causing the agricultural vehicle to flash onboard visual lights, or causing the agricultural vehicle to sound a horn or other auditory system.

Receiving the first sensor data of the agricultural field from one or more first sensors coupled to the unmanned aerial vehicle may include receiving at least one of LiDAR data from one or more LiDAR units, image data from one or cameras, or radar data from one or more radar units coupled to the unmanned aerial vehicle.

In some embodiments, applying an anomaly detection deep neural network to the synchronized first sensor data to generate first predicted anomaly data includes generating an input vector based on the global navigation satellite system data and the first sensor data synchronized across the one or more global navigation satellite system time references.

Applying an anomaly detection deep neural network to the synchronized first sensor data to generate first predicted anomaly data may include applying the anomaly detection deep neural network to the input vector to generate the first predicted anomaly data.

In some embodiments, applying an anomaly detection deep neural network to the synchronized first sensor data to generate first predicted anomaly data includes applying the anomaly detection deep neural network to the synchronized first sensor data to generate at least one of one or more first anomaly predictions or a first anomaly map.

Validating the first predicted anomaly data with the second predicted anomaly data to generate at least one of validated anomalies or a validated anomaly map may include generating a validated anomaly map. In some embodiments, the method further includes displaying the validated anomaly map on a display of the agricultural vehicle.

In some embodiments, validating the first predicted anomaly data with the second predicted anomaly data to generate at least one of validated anomalies or a validated anomaly map includes validating anomalies in the first anomaly data when the second anomaly data includes a corresponding anomaly in the second anomaly data at a same location in the agricultural field an anomaly in the first anomaly data.

Validating the first predicted anomaly data with the second predicted anomaly data may include removing dynamic anomalies from the first anomaly data and the second anomaly data.

In some embodiments, receiving second sensor data includes receiving the second sensor data with the second sensors coupled to the agricultural vehicle as the agricultural vehicle traverses the agricultural field.

In some embodiments, applying an anomaly detection deep neural network to the synchronized first sensor data to generate first predicted anomaly data includes applying one or more of encoder-decoder, a convolutional neural network, a transformer, a recurrent neural network, or a long short-term memory network to the synchronized first sensor data.

Synchronizing the first sensor data across one or more global navigation satellite system time references may include synchronizing the first sensor data across precision time control time references or pulse-per-second time references.

In some embodiments, a system for generating and validating an anomaly map of an agricultural field includes an unmanned aerial vehicle including one or more first sensors configured to receive image data or LiDAR data of the agricultural field, and a first global navigation satellite system receiver. The system further includes an agricultural vehicle including one or more second sensors configured to receive image data or LiDAR data of the agricultural field, and a second global navigation satellite system receiver. In addition, the system includes an anomaly detection and validation system operably coupled to each of the unmanned aerial vehicle and the agricultural vehicle. The anomaly detection and validation system includes at least one processor, and at least one non-transitory computer-readable storage medium having instructions thereon that, when executed by the at least one processor, cause the anomaly detection and validation system to at a first time, receive first sensor data of the agricultural field from the one or more first sensors, apply an anomaly detection deep neural network to the first sensor data to generate first predicted anomaly data, at a second time, receive second sensor data of the agricultural field from the one or more first sensors or the one more second sensors, apply the anomaly deep neural network to the second sensor data to generate second predicted anomaly data, and validate the first predicted anomaly data with the second predicted anomaly data to generate at least one of validated anomalies or a validated anomaly map.

The system may further include instructions that, when executed by the at least one processor, cause the anomaly detection and validation system to generate the validated anomaly map.

In some embodiments, the instructions cause the anomaly detection and validation system to validate the first predicted anomaly data with the second anomaly predicted data by comparing the first predicted anomaly data to the second predicted anomaly data.

The instructions may cause the anomaly detection and validation system to validate the first predicted anomaly data with the second predicted anomaly data by generating the one of the validated anomalies or the validated anomaly map not including anomalies detected based on the first sensor data but not detected by the second sensor data.

In some embodiments, the first sensors and the second sensors include LiDAR units.

In some embodiments, an agricultural vehicle includes a propulsion system, wheels operably coupled to a chassis and the propulsion system, one or more global navigation satellite system units operably coupled to the agricultural vehicle, one or more sensors coupled to the agricultural vehicle, and an anomaly detection and validation system operably coupled to the one or more global navigation satellite system units and to the one or more sensors. The anomaly detection and validation system includes at least one processor, and at least one non-transitory computer-readable storage medium having instructions thereon that, when executed by the at least one processor, cause the anomaly detection and validation system to receive sensor data from the one or more sensors as the agricultural vehicle traverses an agricultural field, apply an anomaly detection deep neural network to the sensor data to generate at least one of anomaly predictions or an anomaly map, and validate the at least one of anomaly predictions or an anomaly map based on at least one of historical anomaly predictions or a historical anomaly map of the agricultural field obtained with an unmanned aerial vehicle.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified overview of an environment including an agricultural field including anomalies where an unmanned aerial vehicle and/or an agricultural vehicle, according to embodiments of the disclosure;
FIG. 2 is a simplified schematic illustrating a top-down view of an unmanned aerial vehicle including an anomaly detection and validation system as part of a computing device, according to embodiments of the disclosure;
FIG. 3 is a simplified perspective view of the agricultural vehicle including an anomaly detection and validation system as part of a computing device, according to embodiments of the disclosure;
FIG. 4 is a simplified overview of an encoder-decoder machine learning model, according to embodiments of the disclosure;
FIG. 5 is an overview diagram of the process of utilizing an encoder-decoder machine learning model to generate anomaly predictions associated with an agricultural field, according to embodiments of the disclosure;
FIG. 6 and FIG. 7 illustrate additional detail associated with the process of generating anomaly predictions associated with an agricultural field, according to embodiments of the disclosure;
FIG. 8 illustrates a diagram of an example embodiment of the anomaly detection and validation system, according to embodiments of the disclosure;
FIG. 9 is a simplified flow chart illustrating a method of generating validated anomalies and/or a generating validated anomaly map, according to embodiments of the disclosure; and
FIG. 10 is a schematic of a computer-readable storage medium including processor-executable instructions configured to embody one or more of the methods of operating an agricultural vehicle, according to embodiments of the disclosure.

### DETAILED DESCRIPTION

The illustrations presented herein are not actual views of any agricultural vehicles or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure, assembly, spreader, or agricultural implement. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's (e.g., agricultural implement's, agricultural application machine) normal direction of travel. In other words, the term "longitudinal" equates to the fore-and-aft direction, whereas the term "transverse" equates to the crosswise direction, or left and right. As used herein, the terms "lateral" and "transverse" are used interchangeably. Furthermore, the terms "axial" and "radial" are made in relation to a rotating body such as a shaft, wherein axial relates to a direction along the rotation axis and radial equates to a direction perpendicular to the rotation axis.

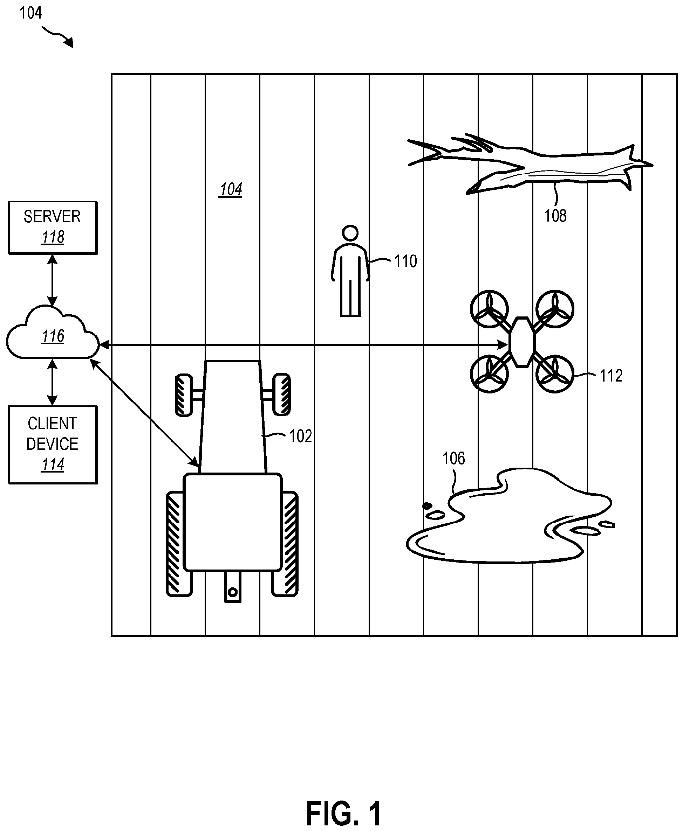

Conventional anomaly detection techniques may not be suited for anomaly detection in agricultural settings and may fail to robustly and accurately detect anomalies that are unique to agricultural settings. Further, conventional anomaly detection techniques may fail to validate detected or predicted anomalies and may be prone to errors due to the various types of objects that may be found in an agricultural field. FIG. 1 depicts an environment 100 (system) including an agricultural vehicle 102 moving in an agricultural field 104. Generally, the agricultural vehicle 102 may be programmed or controlled to move along a predetermined route so as to interact with then entire agricultural field 104 (e.g., to harvest a crop, to turn over the soil, etc.). In some embodiments, the agricultural vehicle 102 may be unmanned-either operating autonomously or being driven remotely. In additional embodiments, anomalies may be difficult for an operator to see even when the agricultural vehicle 102 is manned within the agricultural field 104.

As further shown in FIG. 1, an unmanned aerial vehicle (UAV) 112, which may include a drone may be configured to facilitate capturing and/or validation of detected anomalies in the agricultural field 104. The UAV 112 may be configured to fly over, across, and/or around the agricultural field 104 to capture one or more of image data, LiDAR data, and other sensor data to detect one or more anomalies in the agricultural field 104 and/or validate one or more previously detected anomalies. While FIG. 1 illustrates the UAV 112 over the field 104 at the same time that the agricultural vehicle 102 is in the agricultural field 104, the disclosure is not so limited. As described herein, it will be understood that the UAV 112 may capture sensor data at a different time than (e.g., before, after) the agricultural vehicle 102 moves through the agricultural field 104.

In some embodiments, each of the agricultural vehicle 102 and the UAV 112 are configured to be in operable communication with one or more other devices, such as over a network 116. For example, the agricultural vehicle 102 may be in operable communication with the UAV 112 over the network 116. In some embodiment, one or both of the agricultural vehicle 102 and the UAV 112 are in operable communication with a server 118 over the network 116. In some embodiments, the environment 100 includes a client device 114 (e.g., a laptop, a tablet, a cellular telephone, a smartphone) is configured to be in operable communication with one or more of the server 118, the agricultural vehicle 102, and the UAV 112 over the network 116. The client device 114 may include one or more applications thereon for controlling one or more operations and/or receiving communications from the agricultural vehicle 102 and/or the UAV 112. The server 118 may be located on the ground and may be external to the agricultural field 104. The UAV 112 may be in operable communication with the server 118 via the network 116 for transmitting data to and from the UAV 112.

The network 116 may be any type of network. For example, the network 116 may be a local network, such as a wireless or wired local network. In some examples, the network 116 may include the Internet. In some embodiments, the network 116 is a Bluetooth^{®} network. The network may include one or more ground stations to facilitate communication between the agricultural vehicle 102, the UAV 112, the server 118, and the client device 114.

In some embodiments, the server 118 is configured to perform one or more anomaly detection operations. For example, the server 118 may be configured to carry out one or more of anomaly detection and validation processes described herein with reference to the anomaly detection systems and anomaly detection and validation systems (e.g., the anomaly detection and validation systems 214, 314).

The agricultural field 104 may include various anomalies. For example, the agricultural field 104 may include pooled water 106, a fallen tree 108, or even a person 110 walking through the agricultural field 104. In one or more embodiments, an anomaly within the agricultural field 104 can include any object, person, or animal within the agricultural field 104 whose presence in the agricultural field 104 deviates from what is standard, normal, or expected in that setting. As such, the pooled water 106 may be present as the result of a broken pipe or heavy rainstorm. Similarly, the fallen tree 108 may have been standing near the agricultural field 104 until it was blown down in a storm. Some anomalies in the agricultural setting may be static, such as with the pooled water 106 and the fallen tree 108. Other anomalies in the same setting may be dynamic (e.g., moving) as with the person 110, animals, other vehicles, objects blowing in the wind, and so forth. Moreover, the agricultural vehicle 102 may also be static or dynamic within the agricultural field 104.

Any of the anomalies potentially present within the agricultural field 104 can present hazards and safety issues for the agricultural vehicle 102. For example, the pooled water 106 can cause the agricultural vehicle 102 to get stuck in the mud or can cause engine problems if the water is too deep. The fallen tree 108 can cause the agricultural vehicle 102, a boom extending from the agricultural vehicle 102, or a towed implement behind the agricultural vehicle 102 to become ensnared or blocked. Moreover, the person 110 could be severely injured or killed if the agricultural vehicle 102 travels too close to them. All of these scenarios are further complicated when the agricultural vehicle 102 is dynamic (e.g., moving), the current weather reduces visibility, it is nighttime, and so forth.

As described herein, one or both of the agricultural vehicle 102 and the UAV 112 includes an anomaly detection and validation system for detecting and/or validating detected anomalies in the agricultural field 104. The anomaly detection and validation system may utilize various approaches to robustly and accurately detect (predict) anomalies in the agricultural field 104, generate a validated anomaly map of validated anomalies in the agricultural field 104, validate the presence of the anomalies and/or generate a confidence score for the detected anomalies, and control operations of the agricultural vehicle 102 based on the validated anomalies and/or the validated anomaly map, and/or the confidence score of the validated anomalies.

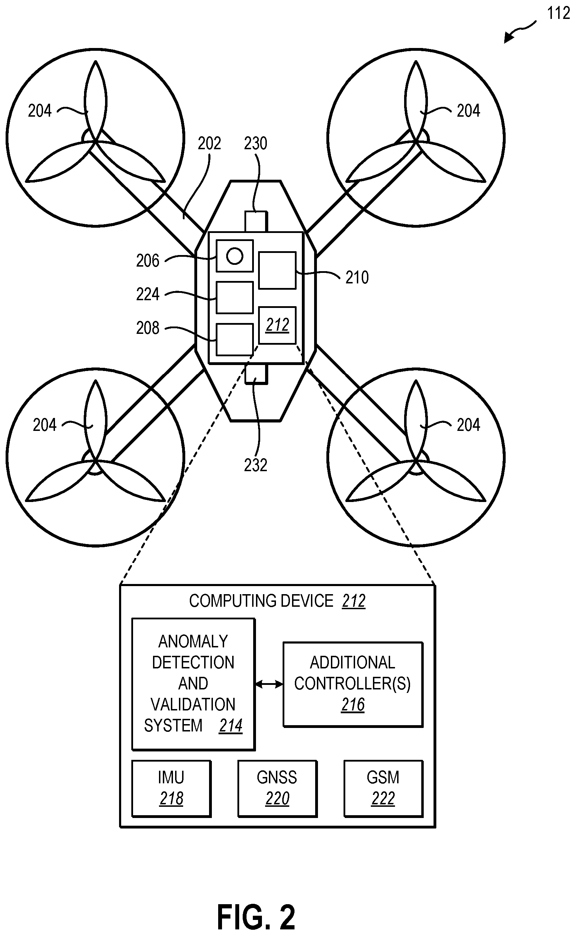

FIG. 2 is a simplified schematic illustrating a top-down view of the UAV 112 including an anomaly detection system 214 as part of a computing device 212, according to embodiments of the disclosure. For clarity and ease of illustration, FIG. 2 illustrates more components of the UAV 112 than FIG. 1. With reference to FIG. 2, the UAV 112 may include a body 202 and propellers 204 coupled to the body 202 and configured to facilitate flying of the UAV 112. The UAV 112 may include additional components and features that are not illustrated in FIG. 2 for clarity and ease of understanding the description. For example, the UAV 112 may include landing gear, a battery compartment carrying one or more batteries, a charging port for charging the batteries, one or more motors for driving the propellers 204, or other components.

The UAV 112 may further include one or more cameras 206 and one or more light detection and ranging (LiDAR) units 208 operably coupled to and carried by the body 202. In addition, the UAV 112 may further include one or more radar units 210. While FIG. 2 illustrates that the UAV 112 includes one camera 206 and one LiDAR unit 208, the disclosure is not so limited. The UAV 112 may include, for example, one camera 206 and one LiDAR unit 208 facing different directions (e.g., each of left, right, up, and down in the view of FIG. 2). The cameras 206 and the LiDAR units 208 may be oriented such the field of view (FOV) of the cameras 206 and the LiDAR units 208 captures areas below the UAV 112. In addition, when the UAV 112 includes radar units 210, the UAV 112 may include a plurality of radar units 210, each having a different field of view than the other radar units 210 and configured to capture data (e.g., radar data) of areas below the UAV 112.

The one or more LiDAR units 208 may be configured to capture LiDAR data, such as LiDAR data from (of) the agricultural field 104 as the UAV 112 flies above or proximate the agricultural field 104. The one or more LiDAR units 208 may be configured to receive (e.g., measure, detect) LiDAR data based on the electromagnetic radiation detected with the LiDAR unit 208 (e.g., with a photodetector of the LiDAR unit 208). In some embodiments, the LiDAR unit 208 generates a LiDAR point cloud based on the detected light. The LiDAR point cloud may be a 3D LiDAR point cloud and may simply be referred to herein as a "3D point cloud." In other embodiments, the LiDAR point cloud is a 2D LiDAR point cloud.

The LiDAR units 208 may include one or more of a topographic LiDAR sensor, a bathymetric LiDAR sensor, a terrestrial LiDAR sensor, a mobile LiDAR sensor (e.g., carried by the UAV 112), another type of LiDAR, or combinations thereof. The LiDAR units 208 may individually include a mechanical scanning (rotating) LiDAR unit, a solid-state LiDAR unit, a flash LiDAR unit, or another type of LiDAR unit.

The one or more cameras 206 may be configured to capture image data. The image data may be grayscale image data, color image data (e.g., in the RGB color space), or multispectral image data. The one or more cameras 206 may include one or more of a 2D-camera, a stereo camera, a time-of-flight (ToF) camera configured to capture 2D and/or 3D image data. In some embodiments, a ToF camera may facilitate determining depth information and improve an accuracy of image data and object pose determination based on the image data received by the one or more cameras 206.

The one or more cameras 206 may be configured to capture 3D image data and may include, for example, a stereo camera. In some embodiments, the one or more cameras 206 are configured to capture 2D image data. The one or more cameras 206 may include one or more of a red, green, blue (RGB) camera, a RGB-IR camera (configured to provide visible images and thermal (e.g., IR) images), a 3D laser scanner (LiDAR), a 2D laser scanner (LiDAR), a charge-coupled device (CCD) camera, a complementary metal oxide semiconductor (CMOS) image sensor, a stereoscopic camera, a monoscopic camera, a short-wave infrared (SWIR) camera (e.g., configured to capture electromagnetic radiation (e.g., light) having a wavelength within a range of from about 0.4 µm to about 2.5 µm, such as from about 0.9 µm to about 1.7 µm or from about 0.4 µm to about 1.9 µm), or a digital single-reflex camera. In some embodiments, the one or more cameras 206 include an RGB camera. In some embodiments, the one or more cameras 206 are configured to capture image data through smoke, fog, snow, and rain and may include a SWIR camera. In some embodiments, the one or more cameras 206 include an RGB-SWIR line scan camera (a 4-sensor RGB SWIR line scan camera). In other embodiments, the one or more cameras 206 are configured to capture RGB image data, SWIR data, long-wave IR (LWIR) data, and/or near-infrared (NIR) data.

The one or more cameras 206 may be configured to capture image data at a frame rate within a range of from about 10 Hz to about 30 Hz. In some embodiments, the frame rate of each of the one or more cameras 206 is substantially the same. However, the disclosure is not so limited, and the frame rate of the one or more cameras 206 may be different than that described. A FOV of each of the one or more cameras 206 may be within a range of from about 60° to about 360°, such as from about 60° to about 90°, from about 90° to about 120°, from about 120° to about 180°, or from about 180° to about 360°. Of course, the FOV of each of the one or more cameras 206 may be different than that described. In some embodiments, the FOV of each of the one or more cameras 206 is substantially the same as the FOV of the other cameras 206.

As described above, in some embodiments, the UAV 112 includes one or more radar units 210. In some embodiments, the radar units 210 each includes a transmitter configured to transmit a high-frequency signal; an antenna configured to broadcast the high-frequency signal; and a receiver configured to receive the high-frequency signal reflected from one or more objects in the environment. The radar units 210 may further include a signal processor configured to determine one or more properties of object(s) from which the high-frequency signal was reflected. The one or more radar units 210 may be configured to scan and receive radar data at a rate within a range of from about 10 Hz to about 50 Hz. However, the disclosure is not so limited, and the scan rate of the one or more radar units 210 may be different than that described. In some embodiments, the scan rate of the one or more radar units 210 may be different than the frame rate of the one or more cameras 206 and/or a scan rate of the one or more LiDAR units 208.

The radar data may include one or more of analog-to-digital (ADC) signals, a radar tensor (e.g., a range-azimuth-doppler tensor), and a radar point cloud. In some embodiments, the radar data includes a point cloud, such as a 2D radar point cloud or a 3D radar point cloud (also, simply referred to herein as a "3D point cloud"). In some embodiments, the radar data includes a 3D radar point cloud.

A FOV of each of the one or more radar units 210 may be within a range of from about 60° to about 360°, such as from about 60° to about 90°, from about 90° to about 120°, from about 120° to about 180°, or from about 180° to about 360°. However, the disclosure is not so limited, and the FOV of each of the one or more radar units 210 may be different than those described. In some embodiments, the FOV of each of the one or more radar units 210 is substantially the same as the FOV of the remaining one or more radar units 210.

The one or more radar units 210 may include a synthetic aperture radar (SAR) or an inverse synthetic aperture radar (ISAR) configured to facilitate receiving relatively higher resolution data compared to conventional radars. The one or more radar units 210 may be configured to scan the radar signal across a range of angles to capture a 2D representation of the environment, each pixel representing the radar reflectivity at a specific distance and angle. In other embodiments, the one or more radar units 210 includes a 3D radar configured to provide range (e.g., distance, depth), velocity (also referred to as "Doppler velocity"), azimuth angle, and elevational angle.

The one or more cameras 206, the one or more LiDAR units 208, and the one or more radar units 210 may be configured to capture (and generate) image data, LiDAR data, and radar data of the agricultural field 104 imaged and/or scanned by the one or more cameras 206, the one or more LiDAR units 208, and the one or more radar units 210 as the UAV 112 flies over and/or proximate the agricultural field 104. The image data, the LiDAR data, and/or the radar data may be used to detect and generate one or more anomaly predictions, as described herein. The image data, the LiDAR data, and the radar data may be referred to herein as "sensor data." Sensor data may refer to only one of the image data, the LiDAR data, or the radar data; two of the image data, the LiDAR data, or the radar data; or all three of the image data, the LiDAR data, or the radar data.

Each of the image data, the LiDAR data, and the radar data may be of the environment of the agricultural field 104. For example, the image data, the LiDAR data, and radar data may be of one or more of the agricultural field 104, animals (e.g., livestock, wild animals, domestic animals), humans, crops, rows of crops, trees, weeds, other plants, utility lines, bales of hay, rocks, wind turbines, fences and fence posts, shelter belts (lines of trees), agricultural vehicles (e.g., tractors, planters, sprayers, combiners, harvesters, mowers, trailers, forager), or other living object or inanimate object that may be located in or proximate the agricultural field 104.

In some embodiments, the field of view of one or more of the cameras 206 is substantially the same (e.g., overlaps) a FOV one or more of the LiDAR units 208 and/or a FOV of one or more of the radar units 210. In some embodiments, the one or more cameras 206 and the one or more LiDAR units 208 are configured to provide a 3D surround stereo view of the agricultural field 104.

The one or more LiDAR units 208, the one or more cameras 206, and the one or more radar units 210 may directly neighbor one another. For example, in some embodiments, the one or more LiDAR units 208, the one or more cameras 206, and the one or more radar units 210 are located at substantially a same elevation (e.g., height), but are laterally spaced from one another. In other embodiments, the one or more LiDAR units 208, the one or more cameras 206, and the one or more radar units 210 are horizontally aligned (e.g., left and right) with another of the one or more of the LiDAR units 208, the one or more cameras 206, and the one or more radar units 210, but is vertically displaced (e.g., located above or below) therefrom).

With continued reference to FIG. 2, the UAV 112 may include a computing device 212 configured to facilitate one or more control operations (e.g., anomaly detection, anomaly validation, object detection, object avoidance, and remote planning operations) of the UAV 112. The computing device 212 may include an anomaly detection and validation system 214 configured to detect one or more anomalies in the agricultural field 104 (generate one or more predicted anomalies in the agricultural field 104) and/or validate one or more of the predicted anomalies. Each of the one or more cameras 206, the LiDAR units 208, and the one or more radar units 210 may be configured to provide image data, LiDAR data, and radar data, respectively, to the anomaly detection and validation system 214.

The UAV 112 may further include an inertial measurement unit (IMU) 218, a global navigation satellite system (GNSS) unit 220, a global system for mobile communication (GSM) 222, and one or more additional controllers 216. The anomaly detection system 214 may be in operable communication with the IMU 218, the GNSS unit 220, and the GSM 222, in addition to the one or more additional controllers 216. In some embodiments, the UAV 112 further includes an input/output (I/O) device 232 including a user interface or display device. The I/O device 232 may include one or more devices configured to receive a user input (e.g., from an operator) of the agricultural vehicle 102 and may include one or more of a keyboard, mouse, microphone, remote control device, button, joystick, trackball, touchpad, lightpen, a speaker, and display device.

The computing device 212 may include one or more additional controllers 216 configured to perform one or more control operations of the UAV 112, such as one or more of navigation controls (e.g., control of steering, acceleration, velocity, and/or navigation of the UAV 112). The UAV 112 may include one or more devices configured to receive a user input (e.g., from an operator) of the UAV 112 and may include one or more of a keyboard, mouse, microphone, remote control device, button, joystick, trackball, touchpad, lightpen, a speaker, and display device.

The IMU 218 may be operably coupled to the UAV 112, such as to the body 202 of the UAV 112. The computing device 212 may be in operable communication with and configured to receive data from the IMU 218. The IMU 218 may be configured to measure one or more of a specific force, an angular rate, and an orientation of the UAV 112 and may include at least one of each of an accelerometer, a gyroscope, and a magnetometer. The IMU 218 may be configured to facilitate determining one or more of a linear acceleration of the UAV 112, a direction of travel of the UAV 112, rotational rates and angular velocity, and a strength and direction of a magnetic field.

In some embodiments, the GNSS 220 is in operable communication with a receiver 224. In some embodiments, the GNSS 228 includes a global positioning system (GPS) and the receiver 224 includes a GPS receiver. The receiver 224 may be configured for determining a position of the UAV 112 during operation of the UAV 112 (e.g., while the UAV 112 flies over and above the agricultural field 104 and/or during capturing of image data, LiDAR data, and/or radar data with the one or more cameras 206, the one or more LiDAR units 208, and the one or more radar units 210.

The GSM 222 may include a digital mobile network and may facilitate digital communications between the UAV 112 (e.g., the computing device 212, the anomaly detection system 214, and the one or more additional controllers 216).

While the IMU 218, the GNSS unit 220, and the GSM 222 are illustrated as part of the computing device 212, in other embodiments, one or more of the IMU 218, the GNSS unit 220, and the GSM 222 are not part of the computing device 212 and are in operable communication with the computing device 212. For example, the IMU 218 may be operably coupled to the body 202 of the UAV 112, and one or both of the GNSS unit 220 and the GSM 222 may be operably coupled to the UAV 112 external to the computing device 212.

The anomaly detection and validation system 214 may be configured to facilitate prediction of one or more anomalies and/or validation of the one or more predicted anomalies (detected anomalies). As described herein, based on the predicted anomalies and/or the validated anomalies, the agricultural vehicle 102 may be controlled to facilitate anomaly avoidance of validated anomalies identified based on data obtained from the one or more cameras 206, the one or more LiDAR units 208, and the one or more radar units 210. In some embodiments, the anomaly detection and validation system 214 generates a validated anomaly map (a map of the validated anomalies) located within the agricultural field 104 and provides a display of the surroundings of the agricultural vehicle 102 to an I/O device of the agricultural vehicle 102 or to an operator remote from the agricultural vehicle 102.

The anomaly detection and validation system 214 may be in operable communication with the one or more cameras 206, the one or more LiDAR units 208, the one or more radar units 210 such as by wired or wireless communication. The anomaly detection and validation system 214 may be configured to receive data from any of these sensors and facilitate anomaly detection and/or anomaly validation (and confidence scoring) in connection with the received data. To illustrate, the anomaly detection and validation system 214 can apply various types of machine learning models to combinations of the sensor data acquired from the one or more LiDAR units 208, the one or more cameras 206, the one or more RADAR units 210, and other sensors to generate digital representations of the agricultural field 104. In some embodiments, the anomaly detection and validation system 214 generates point-cloud datasets based on the sensor data and segments the point-cloud datasets according to anomaly predictions generated by the one or more machine learning models to precisely identify, categorize, and locate any anomalies in the agricultural field 104 and to validate such predicted anomalies.

In some embodiments, the UAV 112 includes a communications interface 230 configured to, for example, send and receive sensor data, previously detected anomaly data, or other data from one or more other devices, such as over the network 116 and/or the agricultural vehicle 102. In some embodiments, the communications interface 230 is configured to be in operable communication with a communications interface of the agricultural vehicle 102. The communications interface 230 may be configured to be in operable communication with one other device through, for example, the network 116.

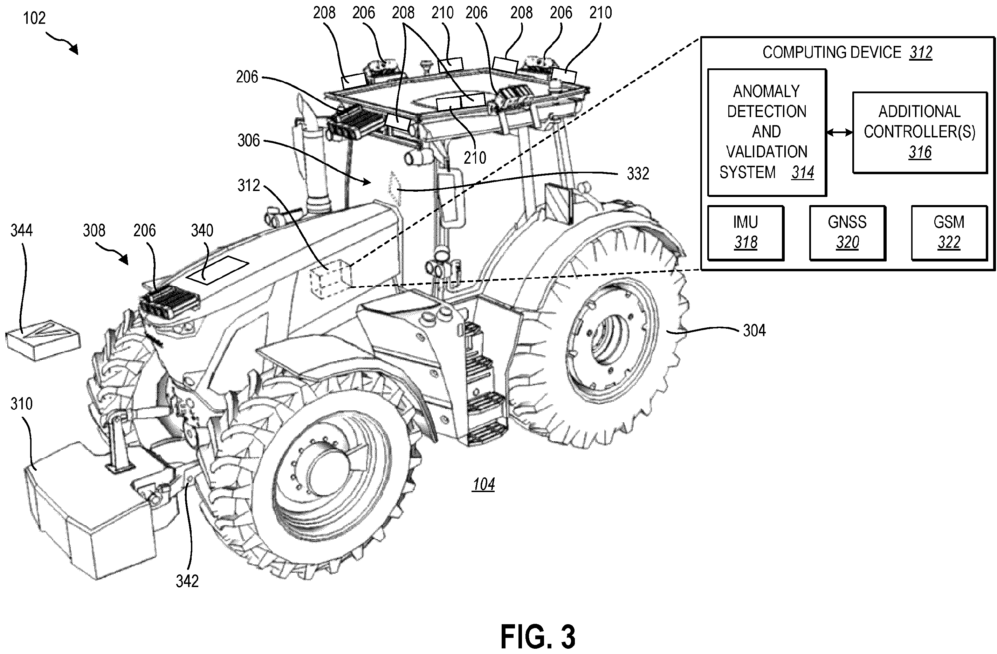

FIG. 3 is a simplified perspective view of the agricultural vehicle 102 including an anomaly detection and validation system 314 as part of a computing device 312, in accordance with one or more embodiments of the disclosure. In some embodiments, the agricultural vehicle 102 includes a tractor. However, the agricultural vehicle 102 may include agricultural vehicles other than and/or in addition to a tractor, such as, for example, a combine, a planter, a tiller, a sprayer, a harvester, a swather, a mower, a spreader, or another agricultural vehicle. The agricultural vehicle 102 may be configured to drive over the agricultural field 104, such as discussed above. The agricultural vehicle 102 includes wheels 304 (e.g., tires) configured for facilitating traversal of the agricultural vehicle 102 over the agricultural field 104.

The agricultural vehicle 102 includes an operator cabin 306 from which an operator of the agricultural vehicle 102 may control the agricultural vehicle 102, and an engine compartment 308 housing an engine or other propulsion system for providing a motive force for moving the agricultural vehicle 102. In some embodiments, the propulsion system includes motors operably coupled to the wheels 304 of the agricultural vehicle 102. The agricultural vehicle 102 includes a steering system (e.g., a steering wheel and associated steering column, universal joint, and rack-and-pinion) configured for facilitating steering and navigation of the agricultural vehicle 102. The agricultural vehicle 102 may include one or more additional structures or assemblies, such as a header 310, configured for performing one or more agricultural operations (e.g., towing an agricultural implement (e.g., a spreader, row units of a planter), a trailer, etc.).

As described with respect to the UAV 112, the agricultural vehicle 102 may include various sensors operably coupled thereto. For example, the agricultural vehicle 102 may include one or more cameras 206, one or more LiDAR units 208, and optionally, one or more radar units 210 operably coupled thereto. The one or more cameras 206, the one or more LiDAR units 208, and the one or more radar units 210 may be substantially the same (e.g., the same) as those described above with reference to the UAV 112.

While FIG. 3 illustrates a particular configuration of the one or more cameras 206, the one or more LiDAR units 208, and the one or more radar units 210, the disclosure is not so limited. The one or more LiDAR units 208, the one or more cameras 206, and the one or more radar units 210 may directly neighbor one another. For example, in some embodiments, the one or more LiDAR units 208, the one or more cameras 206, and the one or more radar units 210 are located at substantially a same elevation (e.g., height), but are laterally spaced from one another. In other embodiments, the one or more LiDAR units 208, the one or more cameras 206, and the one or more radar units 210 are horizontally aligned (e.g., left and right) with the one or more of the other of one or more LiDAR units 208, the one or more cameras 206, and the one or more radar units 210, but is vertically displaced (e.g., located above or below) therefrom.

As described above, the one or more cameras 206, the one or more LiDAR units 208, and the one or more radar units 210 may be configured to capture (and generate) image data, LiDAR data, and radar data of the agricultural field 104 imaged and/or scanned by the one or more cameras 206, the one or more LiDAR units 208, and the one or more radar units 210 as the agricultural vehicle 102 travels across (traverses), through, or around the agricultural field 104. Each of the one or more cameras 206, the LiDAR units 208, and the one or more radar units 210 may be configured to provide image data, LiDAR data, and radar data, respectively, to the anomaly detection and validation system 314. The image data, the LiDAR data, and/or the radar data may be used by the anomaly detection and validation system 314 to detect and generate one or more anomaly predictions, as described herein.

The anomaly detection and validation system 314 may be in operable communication with the one or more cameras 206, the one or more LiDAR units 208, the one or more radar units 210, such as by wired or wireless communication. The anomaly detection and validation system 314 may be configured to receive data from any of these sensors and facilitate anomaly detection and/or validation in connection with the received data.

The agricultural vehicle 102 may include a computing device 312 (also referred to as an "electronic control unit" (ECU), a "system controller," or a "computing unit") configured to facilitate one or more control operations (e.g., safety operations, anomaly detection, object detection, object avoidance, and remote planning operations) of the agricultural vehicle 102 and/or the agricultural operation performed by the agricultural vehicle 102. The computing device 312 may include the anomaly detection and validation system 314, and one or more additional controllers 316. While the computing device 312 is illustrated as proximate the engine compartment 308, such as between the engine compartment 308 and the operator cabin 306, in FIG. 3, the disclosure is not so limited. The computing device 312 may be operably coupled to the agricultural vehicle 102 at other locations. In some embodiments, the computing device 312 is located inside the operator cabin 306, such as proximate an I/O device 332. In some embodiments, the computing device 312 is located on a device separate from the agricultural vehicle 102 (but located within the agricultural vehicle 102, such as in the operator cabin 306), such as one a tablet, laptop, or other device.

The agricultural vehicle 102 may further include an IMU 318, a GNSS unit 320, an input/output (I/O) device 332, and a GSM 322. In some embodiments, the I/O device 332 includes a user interface or display device. The I/O device 332 may include one or more devices configured to receive a user input (e.g., from an operator) of the agricultural vehicle 102 and may include one or more of a keyboard, mouse, microphone, remote control device, button, joystick, trackball, touchpad, lightpen, a speaker, and display device. The I/O device 332 may be configured to receive a user input from the operator of the agricultural vehicle 102 and/or to provide one or more displays to the user. The I/O device 332 displays may include touch screen displays, non-touch screen displays, color displays, non-color displays, or any combination thereof.

While the IMU 318, the GNSS unit 320, and the GSM 322 are illustrated as part of the computing device 312, in other embodiments, one or more of the IMU 318, the GNSS unit 320, and the GSM 322 are not part of the computing device 312 and are in operable communication with the computing device 312. For example, the IMU 318 may be operably coupled to a chassis 342 of the agricultural vehicle 102, and one or both of the GNSS unit 320 and the GSM 322 may be operably coupled to the agricultural vehicle 102 external to the computing device 312.

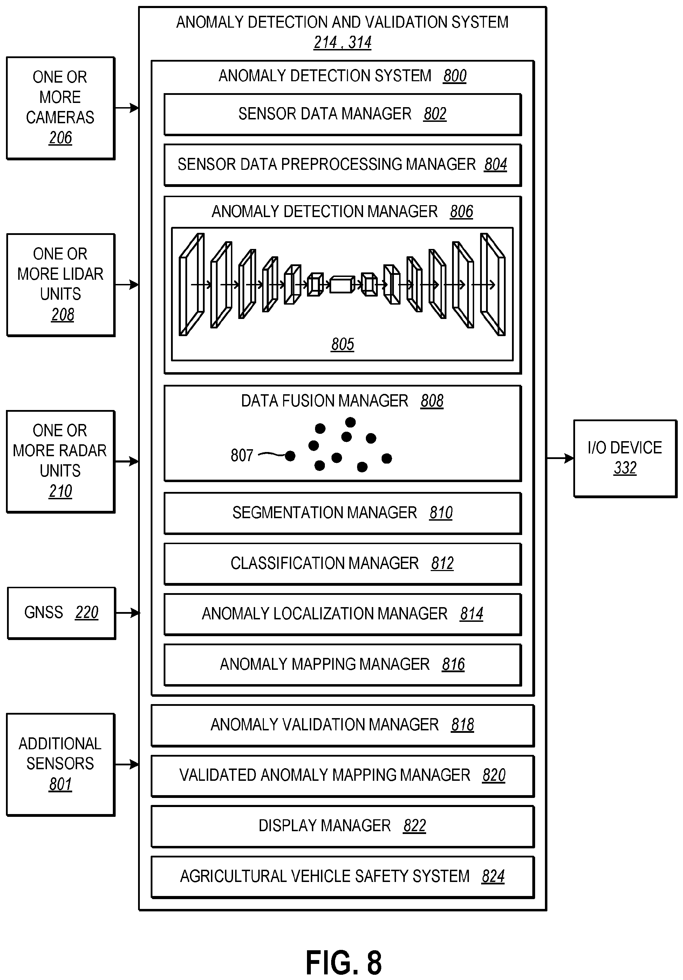

The anomaly detection and validation system 314 may be in operable communication with the IMU 318, the GNSS unit 320, and the GSM 322, in addition to one or more additional controllers 316 configured to perform one or more control operations of the agricultural vehicle 102, such as one or more navigation controls (e.g., control of steering, acceleration, velocity, braking, and/or navigation of the agricultural vehicle 102). The anomaly detection and validation system 314 may be configured to facilitate one or more safe operations of the agricultural vehicle 102. For example, the anomaly detection and validation system 314 may be configured to validate predicted anomalies previous identified (e.g., by an anomaly detection system 800 (FIG. 8)), to facilitate anomaly avoidance of anomalies identified based on sensor data from the one or more cameras 206, the one or more LiDAR units 208, and the one or more radar units 210 to perform autonomous vehicle operation, to perform a leader-follower operation, to provide a display of the surroundings of the agricultural vehicle 102 to the I/O device 332, and to provide validation anomalies to a remote location for remote planning, for example.

The one or more additional controllers 316 may include one or more of a speed controller, a track adjustment controller, a height adjustment controller, and a controller for facilitating one or more agricultural operations (e.g., a planting operation, a spreading operation, a spraying operation, a bailing operation, a cutting operation, a harvesting operation, or another operation).

Each of the IMU 318, the GNSS unit 320, and the GSM 322 may be substantially the same as the respective IMU 218, the GNSS unit 220, and the GSM 222 described above with reference to the UAV 112. In some embodiments, the GNSS unit 320 is in operably communication with a receiver 340, which may include a GPS receiver configured to determine a position of the agricultural vehicle 102 during operation of the agricultural vehicle 102 (e.g., during traversal of the agricultural field 104 with the agricultural vehicle 102 and/or during capturing of image data with the one or more cameras 206, LiDAR data with the one or more LiDAR units 208, and radar data with the one or more radar units 210.

In some embodiments, an object 344 (which may also be referred to as an "alignment object" or a "reference object") may be located on the agricultural vehicle 102 and may include a reference for alignment of data from the one or more cameras 206, the one or more LiDAR units 208, the one or more radar units 210, and any other sensors. In some embodiments, the object 344 is located on the ground of the agricultural field 104. In other embodiments, the object 344 is fixedly coupled to the agricultural vehicle 102 and in the FOV of at least one of the one or more cameras 206, the one or more LiDAR units 208, the one or more radar units 210.

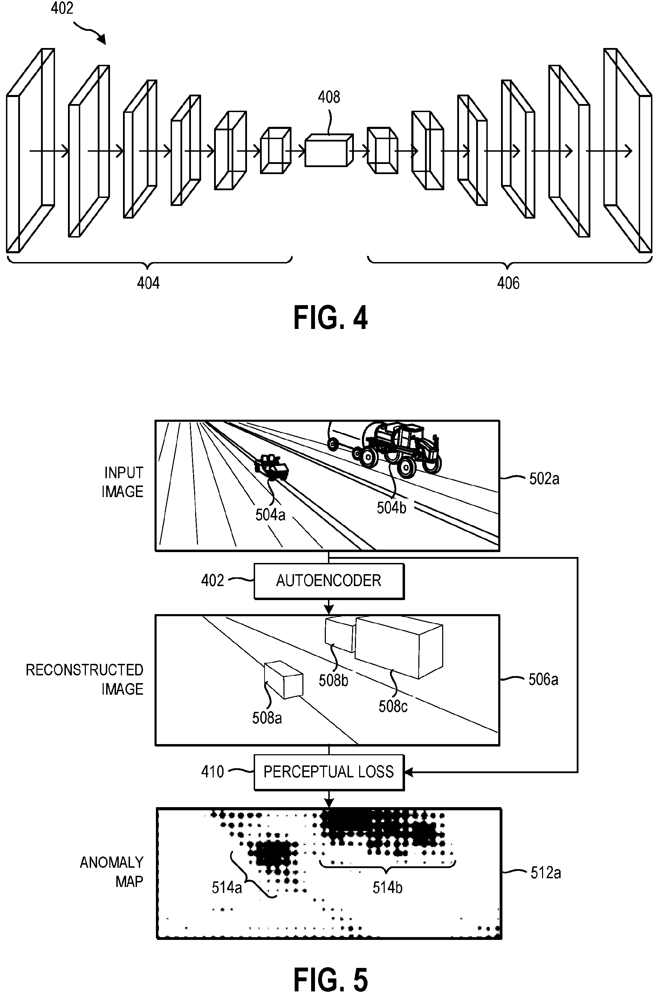

As mentioned above, the anomaly detection and validation systems 214, 314 utilize data from various sensors operably coupled to the respective UAV 112 or the agricultural vehicle 102 to robustly and accurately detect a wide range of anomalies within the agricultural field 104 (predicted anomalies within the agricultural field 104), to create a map of the predicted anomalies (a predicted anomaly map; also referred to as an anomaly map), and/or to validate the presence of the predicted anomalies and/or to validation the predicted anomaly map. FIG. 4 through FIG. 7 provide an overview of how the anomaly detection system of the anomaly detection and validation systems 214, 314 detect these anomalies and generate the anomaly map. FIG. 8 provides additional detail related to specific implementations of the anomaly detection and validation systems 214, 314 incorporating the anomaly detection system.

In one or more embodiments, the anomaly detection systems implement an auto-encoder 402, such as illustrated in FIG. 4. For example, while other object detectors are limited to a predefined set of classes, the anomaly detection systems of the anomaly detection and validation systems 214, 314 train and maintain the auto-encoder 402 to recognize deviations from an established baseline pattern. In this way the auto-encoder 402 can detect a wide range of anomalies without being trained with a large and/or annotated training set.

In more detail, as shown in FIG. 4, the auto-encoder 402 can include an encoder 404 and a decoder 406. In one or more embodiments, anomaly detection systems train the auto-encoder 402 to encode (i.e., with the encoder 404) input data into a lower-dimensional representation (e.g., latent space) and then decode (i.e., with the decoder 406) it back to the original input. For example, the encoder 404 can compress the input data into a smaller representation 408 of itself. The decoder 406 then reconstructs the original input from this smaller representation. This reconstruction is based on how the anomaly detection systems 214, 314 train the auto-encoder 402.

In one or more embodiments, the anomaly detection systems train the auto-encoder 402 on a dataset containing normal or typical sensor data associated with agricultural settings. For example, this dataset can include image data and/or video data of normal agricultural fields (e.g., with no anomalies), radar data from normal agricultural fields, LiDAR data from normal agricultural fields, and so forth. Generally, training seeks to minimize the difference between the data input into the encoder 404 of the auto-encoder 402 and the reconstructed data generated by the decoder 406 of the auto-encoder 402. As a result of being trained on this "normal" data related to agricultural fields, the auto-encoder 402 learns to identify anything that may be abnormal or anomalous in new (e.g., unlearned) agricultural field data. In one or more implementations, and unlike standard model training, training the auto-encoder 402 does not require a large dataset or annotated input data. Instead, the anomaly detection systems 214, 314 train the auto-encoder 402 to generate reconstructed data that includes areas of poor reconstruction where anomalies exist in the underlying input.

To illustrate, FIG. 5 provides an overview of the anomaly detection systems of the anomaly detection and validation systems 214, 314 identifying areas of anomaly in an input image 502a. For example, the input image 502a may be captured by the one or more cameras 206 mounted on the agricultural vehicle 102 or the UAV 112. As shown in the input image 502a, the agricultural field 104 may include additional vehicles 504a, 504b that surround the agricultural vehicle 102. In this example, the anomaly detection systems 214, 314 can generate an input vector from the input image 502a and apply the auto-encoder 402 to the generated input vector. As discussed above, the encoder 404 of the auto-encoder 402 can compress the input vector into a smaller representation 408, and then the decoder 406 of the auto-encoder 402 can generate a reconstructed image 506a that represents the original input image 502a. In one or more implementations, the auto-encoder 402 generates the reconstructed image 506a with areas 508a, 508b, and 508c of poor reconstruction. These areas 508a-508c of poor reconstruction indicate that the auto-encoder 402 found anomalous or unexpected data in those areas of the input image 502a.

In one or more embodiments, the anomaly detection systems apply one or more perceptual loss functions 410 (or reconstruction loss functions, such as feature reconstruction loss functions and/or reconstruction loss functions of non-feature-based losses) to the reconstructed image 506a. For example, the perceptual loss functions 410 are applied to compare the entire input image 502a to the reconstructed image 506a to determine the areas 508a-508c of poor reconstruction. In some embodiments, the anomaly detection systems can utilize the one or more perceptual loss functions 410 to compare the areas 508a-508c to additional, specific features. To illustrate, the one or more perceptual loss functions 410 may compare the areas 508a-508c to known anomalies such as vehicles, humans, animals, and other objects and obstacles. In at least one embodiment, the one or more perceptual loss functions 410 can generate an anomaly map 512a or predicted (detected) anomalies. For example, the anomaly map 512a can include heat map features where anomalies 514a, 514b (also referred to as "predicted anomalies") are indicated within the anomaly map 512a are different or "hotter" colors. In additional implementations, the anomaly map 512a may include bounding boxes associated with the anomalies 514a, 514b indicating predicted edges of the anomalies 514a, 514b, and/or scores associated with the anomalies 514a, 514b indicating how likely it is that the geographic areas in the agricultural field 104 corresponding to the predicted anomalies 514a, 514b actually include agricultural anomalies.

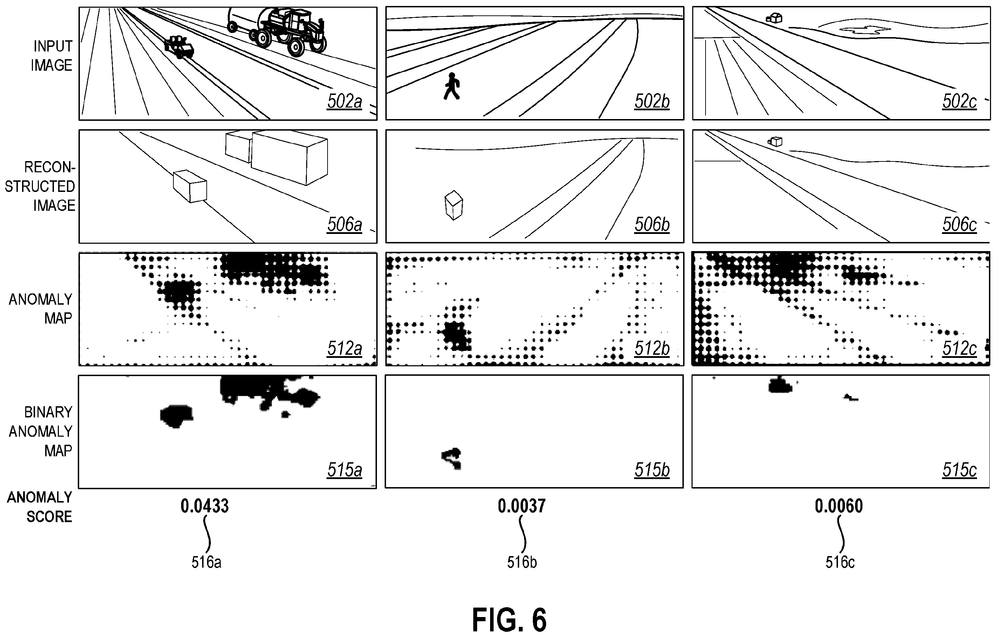

In more detail, FIG. 6 illustrates additional information associated with the anomaly detection process. For example, the anomaly detection systems of the anomaly detection and validation systems 214, 314 apply the auto-encoder 402 to the input images 502b, 502c in addition to the input image 502a to generate the reconstructed images 506a-506c. As discussed above, the reconstructed images 506a-506c include areas of poor reconstruction. In response to further applying one or more perceptual loss functions 410 to the reconstructed images 506a-506c, the anomaly detection systems generate anomaly maps 512a, 512b, and 512c, respectively. As discussed above, the anomaly maps 512a-512c can function as heat maps where predicted anomalies have a "hotter temperature" than surrounding areas.

As further shown in FIG. 6, in at least one embodiment, the anomaly detection systems can further generate binary anomaly maps 515a-515c, respectively, from the anomaly maps 512a-512c. For example, the anomaly detection systems can generate the binary anomaly maps 515a-515c by thresholding the anomaly maps 512a-512c (e.g., at the pixel level) and applying morphological operations as a post-processing operation. In some embodiments, the anomaly detection systems generate the binary anomaly maps 515a-515c by determining outer edges of the "hot" areas in the anomaly maps 512a-512c. The anomaly detection systems can then mask the pixels within these outer edges with a single color (e.g., white), and mask the pixels outside these outer edges with a different color (e.g., black). In some embodiments, the anomaly detection systems generate the binary anomaly maps 515a-515c by clustering methods and/or deep learning approaches.

Additionally, as shown in FIG. 6, anomaly detection systems can also generate anomaly scores 516a, 516b, and 516c, respectively for the anomalies detected in connection with the input images 502a-502c. For example, the anomaly detection systems can utilize the intensity of the "hot" areas in the anomaly maps 512a-512c in combination with the size of the masked areas in the binary anomaly maps 515a-515c to generate the anomaly scores 516a-516c. In one or more implementations, the anomaly scores 516a-516c indicate a likelihood that the corresponding input images 502a-502c depict an anomaly. Additionally or alternatively, the anomaly scores 516a-516c can indicate a severity, size, or speed of a predicted anomaly depicted in each of the input images 502a-502c.

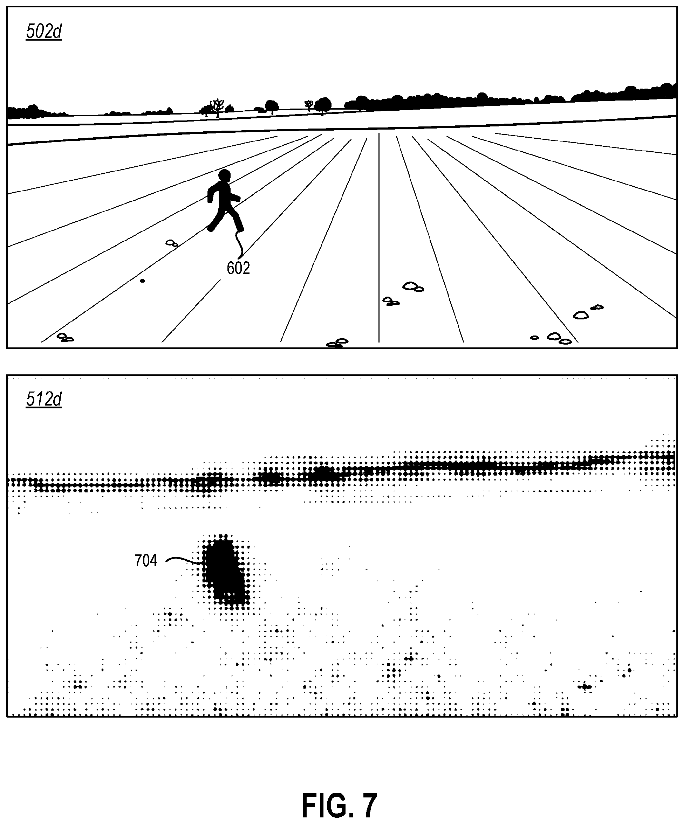

To further illustrate, as shown in FIG. 7, an input image 502d can depict a person 702 walking in front of the agricultural vehicle 102 in the agricultural field 104, or may depict a stationary object in the agricultural field 104. The anomaly detection systems can apply the auto-encoder 402 to the input image 502d to generate the anomaly map 512d. In one or more implementations, the heat or color intensity of the area 704 in the 512d can indicate both that an anomaly is present in that area, and a score of that anomaly. As described herein, the predicted anomalies 514a-514c, the anomaly maps 512a-512c, and/or the anomaly scores 516a-516c at a first time may be compared to one or more of the predicted anomalies 514a-514c, the anomaly maps 512a-512c, and/or the anomaly scores 516a-516c at a second time to validate anomalies and/or generate a validated anomaly map. The anomaly detection and validation systems 214, 314 can perform one or more security actions based on the validated anomalies and/or the validated anomaly maps, such as slowing the agricultural vehicle 102, stopping the agricultural vehicle 102, sounding an alarm within the agricultural vehicle 102, flashing one or more displayed components on the I/O device 332 inside the agricultural vehicle 102, and so forth.

While FIG. 4 through FIG. 7 illustrate how the anomaly detection systems detect anomalies and generate anomaly maps in connection with input images captured by the one or more cameras 206, the input images may be based on LiDAR data from the LiDAR units 208, radar data from the radar units 210, and/or a combination of the image data, the LiDAR data, and the radar data. The anomaly detection systems can similarly detect anomalies and generate anomaly maps in connection with other types of sensor data.

As described herein, responsive to the anomaly detection systems of the anomaly detection and validation systems 214, 314 generating the anomaly maps, at least one of the anomaly detection systems 214, 314 may be configured to validate the generated anomaly maps and/or the detected anomaly data.

FIG. 8 illustrates an embodiment of the anomaly detection and validation systems 214, 314 including an anomaly detection system 800 according to embodiment of the disclosure. FIG. 8 illustrates how the anomaly detection and validation systems 214, 314 can use data from a combination of sensors, detect (predict) anomalies within that sensor data, generate validated anomalies and/or a validated anomaly map based on the sensor data, and control operations of the agricultural vehicle 102 based on the validated anomalies and/or the validated anomaly map.

In more detail, the anomaly detection system 800 includes a sensor data manager 802 that can receive sensor data from the one or more cameras 206, the one or more LiDAR units 208, one or more radar units 210, the GNSS unit 220, and one or more additional sensors 801 (e.g., sensor data from the GSM 222). Thus, in addition to spatial data from the one or more cameras 206, the one or more LiDAR units 208, and the one or more radar units 210, the sensor data manager 802 may receive data from the GNSS unit 220. For example, as shown in FIG. 8, the sensor data manager 802 can receive or acquire high-precision GNSS data from the GNSS unit 220. In some embodiments, the GNSS unit 220 includes real-time kinematic (RTK) capability. The GNSS data may include precise location data for the UAV 112 and/or the agricultural vehicle 102 along with precise timestamps with each location reading. Additionally, the sensor data manager 802 can receive image data (e.g., digital images) captured by the one or more cameras 206-either individually or in sequences. Additionally, the sensor data manager 802 can receive one or more scans from the one or more LiDAR units 208 and/or LiDAR data from one or more of the LiDAR units 208. In some embodiments, the sensor data manager 802 further receives radar data from the one or more radar units 210. In some embodiments, the sensor data manager 802 can synchronize the received sensor data such that image data, LiDAR data, and optionally, radar data are grouped together by the same or similar timestamps.

In one or more embodiments, the anomaly detection 800 includes a sensor data preprocessing manager 804. In one or more implementations, the sensor data preprocessing manager 804 preprocesses the LiDAR and/or RADAR scan sequences prior to anomaly detection. For example, the sensor data preprocessing manager 804 can filter noise and irrelevant information out of the LiDAR and/or RADAR scan sequences. Additionally, the sensor data preprocessing manager 804 can align the LiDAR and/or RADAR scan sequences in a common coordinate system thus synchronizing temporal data with the spatial data represented in the scan sequences. In some embodiments, the sensor data preprocessing manager 804 is configured to filter noise and irrelevant information from the image data.

The sensor data preprocessing manager 804 may synchronize the sensor data received or acquired from the GNSS unit 220 and other sensors. For example, the sensor data preprocessing manager 804 can utilize the GNSS time references (e.g., PTP or PPS) associated with each GNSS reading or data item to synchronize any other data received from the one or more cameras 206, the one or more LiDAR units 208, and the one or more radar units 210 across one or more GNSS time references. In at least one implementation, this synchronization helps to facilitate accurate alignment of spatial information with the GNSS data, as well as the temporal alignment of the sensor data. To illustrate, the sensor data preprocessing manager 804 can identify a GNSS time reference for a first GNSS data input, identify a first spatial data input with a timestamp that corresponds to the GNSS time reference, and match the first GNSS data input with the first spatial data input. For example, the GNSS time reference may include a precision time protocol (PTP) time reference or a pulse-per-second (PPS) time reference. In at least one implementation, this synchronization helps to ensure accurate alignment of spatial information with the GNSS data.

In some embodiments, an anomaly detection manager 806 can generate an input vector from the sensor data received by the sensor data manager 802. For example, the anomaly detection manager 806 can train and maintain an anomaly detection deep neural network (DNN) 805 that detects anomalies in agricultural sensor data. As such, the anomaly detection manager 806 can generate an input vector for the anomaly detection DNN 805 from the sensor data where features of the sensor data are represented in the input vector. The anomaly detection manager 806 can then apply the anomaly detection DNN 805 to the input vector to generate one or more anomaly predictions associated with the agricultural field 104.

In some embodiments, the anomaly detection manager 806 applies the anomaly detection DNN 805 to different types of sensor data individually. For example, in some embodiments, the anomaly detection manager 806 applies the anomaly detection DNN 805 to an input vector generated with only the data provided by the one or more LiDAR units 208. In that embodiment, the DNN 805 generates one or more LiDAR-based anomaly predictions associated with the agricultural field 104. Similarly, in one embodiment, the anomaly detection manager 806 applies the anomaly detection DNN 805 to an input vector generated from image data provided by the one or more cameras 206 to generate one or more image-based anomaly predictions associated with the agricultural field 104. In some embodiments, the anomaly detection manager 806 applies the anomaly detection DNN 805 to an input vector generated with the data provided by the one or more LiDAR units 208, the one or more cameras 206, and optionally, the one or more radar units 210. Such data may be synchronized (e.g., in time) in the input vector, such as by the sensor data preprocessing manager 804.

As discussed above, in one or more implementations, the anomaly detection DNN 805 includes an encoder-decoder computational model (e.g., the auto-encoder 402 discussed above in connection with FIG. 4). In at least one implementation, the anomaly detection system 800 trains the anomaly detection DNN 805 on typical (e.g., non-anomalous) agricultural sensor data until the anomaly detection DNN 805 learns to recognize features in agricultural data that are not typical (e.g., anomalous) in agricultural settings (e.g., in the agricultural field 104). Thus, in some implementations, the anomaly detection DNN 805 generates anomaly predictions that indicate both portions (e.g., pixels) of sensor data that was anomalous (e.g., an area in a digital image, a portion of a LiDAR scan) and a certainty score indicating the likelihood that that the portions of the sensor data contains an anomaly. In some implementations, the anomaly detection DNN 805 may be a different type of machine learning model such as a convolutional neural network, transformer, a recurrent neural network (RNN), a long short-term memory (LSTM) network, or a hybrid network.

In some implementations, the anomaly detection manager 806 trains and maintains a single anomaly detection DNN 805 to apply to various types of sensor data input vectors. For example, the anomaly detection manager 806 can train the anomaly detection DNN 805 across a range of sensor data types to generate anomaly predictions associated with any type or combination of input sensor data. Additionally or alternatively, the anomaly detection manager 806 can train and maintain separate anomaly detection DNNs that are each specific to a single type of input data. In that implementation, for example, the anomaly detection manager 806 can apply an anomaly detection DNN that is specific to image data (digital images) to a digital image-based input vector to generate one or more image-based anomaly predictions. In another example, the anomaly detection manager 806 can apply an anomaly detection DNN that is specific to LiDAR data to a LiDAR-based input vector to generate one or more LiDAR-based anomaly predictions. In some embodiments, the anomaly detection manager 806 can apply an anomaly detection DNN that is specific to radar data to a radar-based input vector to generate one or more radar-based anomaly predictions.

In some embodiments, the anomaly detection manager 806 applies the anomaly detection DNN 805 to the input vector to generate one or more anomaly predictions. For example, the anomaly detection manager 806 can apply the anomaly detection DNN 805 to the generated input vector to generate static anomaly predictions, dynamic anomaly predictions, or both static and dynamic anomaly predictions. To illustrate, because the features represented in the input vector are temporally aligned, the anomaly detection DNN 805 can detect both static and dynamic anomalies by analyzing how those features change over the period of time represented by the input vector. As such, in the embodiment illustrated in FIG. 8, the anomaly detection DNN 805 can generate anomaly predictions including a tag or other indicator stating whether the predicted anomaly is static or dynamic. In some embodiments, and as described herein, static anomalies may be validated by the anomaly detection and validation system 214, 314, whereas dynamic anomalies may not be validated since the dynamic anomalies may be located at a different region of the agricultural field 104 or may have moved out of the agricultural field 104 after a first time when the dynamic anomalies were predicted by the anomaly detection manager 806.

In one or more embodiments, the anomaly detection manager 806 utilizes advanced machine learning techniques to detect static anomalies in the synchronized sensor data. For example, as discussed above, the anomaly detection manager 806 can generate an input vector from the synchronized sensor data and apply the anomaly detection DNN 805 to the input vector to generate one or more static anomaly predictions within the agricultural field 104.

In at least one embodiment, the anomaly detection manager 806 can further apply one or more generative models sequentially to the one or more static anomaly predictions generated by the anomaly detection DNN 805 to further refine the one or more static anomaly predictions. For example, the anomaly detection manager 806 can apply a variational autoencoder (VAE) or a generative adversarial network (GAN) to the one or more static anomaly predictions generated by the anomaly detection DNN 805 to further refine the one or more static anomaly predictions relative to the agricultural field 104 and the position of the anomaly predictions relative to one another and/or objects within the agricultural field 104.

The anomaly detection DNN 805 may generate anomaly predictions in various ways. For example, the anomaly detection DNN 805 can generate an anomaly prediction including a heat map where anomalous areas in the agricultural field 104 have a hotter heat signature (e.g., a brighter color in a visual display). In another embodiment, the anomaly detection DNN 805 can generate an anomaly prediction including one or more bounding boxes overlaid on a display of the agricultural field 104 indicating anomalous areas. In another embodiment, the anomaly detection DNN 805 may generate an anomaly prediction including one or more segmentation masks overlaid on a display of the agricultural field 104 indicating anomalous areas. In any of these embodiments, the anomaly detection DNN 805 may further include confidence scores (e.g., a likelihood that the indicated area contains an anomaly) adjacent to the anomalous areas.

With continued reference to FIG. 8, in some embodiments, the anomaly detection system 800 may, optionally, further include a data fusion manager 808. In one or more implementations, the data fusion manager 808 works in parallel or in sequence with the anomaly detection manager 806. For example, the data fusion manager 808 can fuse the sensor data received by the sensor data manager 802 into a point-cloud dataset 807. In some embodiments, the point-cloud dataset is a collection of data points defined in a three-dimensional coordinate system. As such, the data fusion manager 808 can generate the point-cloud dataset 807 from the received sensor data by synchronizing the different types of sensor data for spatial alignment, and then combining features of the sensor data with extended metadata indicating a three-dimensional position of each pixel in the agricultural field 104 relative to one another and/or to the agricultural vehicle 102.

To illustrate, the sensor data manager 802 may receive both LiDAR sensor data from the one or more LiDAR units 208 and image-based sensor data from the one or more cameras 206. In one or more implementations, the data fusion manager 808 can synchronize the LiDAR sensor data and the image-based sensor data such that images taken relative to the UAV 112 (if the data fusion manager 808 is part of the anomaly detection system 214) and/or the agricultural vehicle 102 (e.g., if the data fusion manager 808 is part of the anomaly detection system 314) are synchronized with LiDAR sensor data captured at the same position relative to the respective one of the UAV 112 or the agricultural vehicle 102. The data fusion manager 808 can then combine features of the LiDAR data across pixels of the image data with extended metadata that indicates a three-dimensional position of each pixel relative to the UAV 112 and/or the agricultural vehicle 102 to generate combined feature data with the respective one of the anomaly detection systems 214, 314. In some embodiments, the anomaly detection manager 806 applies the anomaly detection DNN 805 to the combined feature data (the fused data) to generate the anomaly predictions.

Following generation of the point-cloud dataset 807 by the data fusion manager 808, the anomaly detection system 800 may optionally include a segmentation manager 810. The segmentation manager may segment the point-cloud dataset 807 into individual segments indicating spatial distributions and relationships between anomalies indicated by the one or more anomaly predictions generated by the anomaly detection DNN 805. For example, the segmentation manager 810 can determine positions of each of the anomaly predictions generated by the anomaly detection DNN 805 at relative locations within the point-cloud dataset 807. The segmentation manager 810 can then divide the point-cloud dataset 807 into segments based on the positions of the anomaly predictions and utilize the segments to further determine how the anomalies represented by the anomaly predictions are spatially distributed in the agricultural field 104 relative to one another and/or the various locations of the agricultural field 104 (e.g., various objects in the agricultural field 104).

In more detail, the segmentation manager 810 can utilize one or more advanced deep learning computational models to determine relative locations of predicted anomalies within the point-cloud dataset 807. For example, the segmentation manager 810 can apply an advanced deep learning model to each of one or more LiDAR-based anomaly predictions generated by the anomaly detection DNN 805 and to each of one or more image-based anomaly predictions generated by the anomaly detection DNN 805. In at least one embodiment, the advanced deep learning model can generate relative locations of each of the anomaly predictions within the point-cloud dataset 807. In some embodiments, the segmentation manager 810 applies the advanced deep learning model to the combined feature data.

The segmentation manager 810 can then divide the point-cloud dataset 807 into segments based on these relative positions. For example, in one embodiment, the segmentation manager 810 can divide the point-cloud dataset 807 into segments where the position of a LiDAR-based anomaly prediction aligns with the position of an image-based anomaly prediction. Such an alignment may serve as a strong indicator of the presence of an anomaly at that relative location (e.g., a match between the image-based anomaly prediction and the LiDAR-based anomaly prediction). In additional or alternative embodiments, the segmentation manager 810 may divide the point-cloud dataset 807 into segments where a size of an anomaly prediction exceeds a predetermined threshold.

Finally, the segmentation manager 810 utilizes the segments within the point-cloud dataset 807 to determine a spatial distribution of the anomaly predictions relative to one another in the agricultural field 104, the agricultural vehicle 102, and/or the UAV 112. For example, the segmentation manager 810 can determine where a particular segment of the point-cloud dataset 807 is located relative to the agricultural vehicle 102 and/or the UAV 112. The segmentation manager 810 can then determine how close or far apart each of those segments are located relative to each other and the respective agricultural vehicle 102 and/or UAV 112. If two or more segments (e.g., a segment associated with an image-based anomaly prediction and a segment associated with a LiDAR-based anomaly prediction) are located within a threshold distance of each other, the segmentation manager 810 may determine that the anomaly predictions are associated with a single anomaly. The segmentation manager 810 can then determine how that combined anomaly is positioned relative to the agricultural vehicle 102, the UAV 112, and/or other detected anomalies in the agricultural field 104.

In some embodiments, the segmentation manager 810 groups the anomaly predictions generated by the anomaly detection DNN 805 based on temporal characteristics. For example, the segmentation manager 810 can group the anomaly predictions based on temporal characteristics, such as a duration of the predicted anomaly, the speed of the predicted anomaly, or a change in the predicted anomaly's shape or size.

Alternatively, if the anomaly detection system 214, 314 does not include the data fusion manager 808, the segmentation manager 810 may group the anomaly predictions (determined by the anomaly detection manager 806) generated by the anomaly detection DNN 805 based on size, shape, or other property of the detected anomaly.

Next, in some embodiments, the anomaly detection system 800 includes a classification manager 812. In one or more embodiments, the classification manager 812 classifies the groups or segments of anomaly predictions into different categories. For example, the classification manager 812 can classify the segmented anomaly predictions into categories such as, but not limited to, moving or stationary objects, water bodies, speed, size, change in size, change in speed, and so forth. Additionally, the classification manager 812 can estimate trajectories or paths of dynamic anomalies.

In one or more embodiments, the classification manager 812 can classify each of the one or more anomaly predictions as static anomalies or dynamic anomalies. For example, the classification manager 812 can combine data from the one or more cameras 206 and the one or more LiDAR units 208 to generate a common point-cloud with extended metadata in either image space or in 3D space. Additionally, the classification manager 812 can further combine data from the one or more radar units 210 into the common point-cloud to add speed and distance data into the point-cloud data representation. The classification manager 812 can further segment the point-cloud based on the anomalies represented therein. From the segmented point-cloud, the classification manager 812 can then determine whether each of the one or more anomaly predictions is associated with a static anomaly or with a dynamic anomaly.

In some embodiments, the classification manager 812 can perform certain post-processing. For example, once the anomaly detection manager 806 makes at least one anomaly prediction, the classification manager 812 can perform additional analysis to categorize the predicted anomaly. As a result of this analysis, the classification manager 812 can estimate the size, location, and other relevant properties of the predicted anomaly.

As further shown in FIG. 8, the anomaly detection system 800 includes an anomaly localization manager 814. For example, the anomaly localization manager 814 can localize predicted anomalies within 3D space using the high-precision GNSS data and spatial information from the additional sensors (e.g., the one or more cameras 206, the one or more LiDAR units 208, and the one or more radar units 210). In at least one embodiment, the anomaly localization manager 814 localizes the predicted anomalies within a 3D space by generating heatmaps, bounding boxes, segmentation masks, and so forth.

In one or more embodiments, as additionally shown in FIG. 8, the anomaly detection system 800 includes an anomaly mapping manager 816. For example, the anomaly mapping manager 816 generates a detailed map of the predicted anomalies (e.g., predicted static anomalies) within the agricultural field 104 relative to the position of the agricultural vehicle 102, the UAV 112, objects in the agricultural field 104, and/or other predicted anomalies in the agricultural field 104 based on localized data generated by the anomaly localization manager 814. To illustrate, the anomaly mapping manager 816 can generate the detailed predicted anomaly map including an indication of the positions of the predicted static anomalies and other information indicating a distance between the predicted anomalies and other predicted anomalies, a distance between the predicted anomalies and other objects in the agricultural filed 104, an indication of whether a current route or path of the agricultural vehicle 102 will be impacted by the predicted anomalies, and so forth.

With further reference to FIG. 8, the anomaly detection and validation systems 214, 314 include an anomaly validation manager 818. The anomaly validation manager 818 can perform additional validations on the one or more anomaly predictions generated by the anomaly detection DNN 805 of the anomaly detection system 800. In at least one embodiment, the anomaly validation manager 818 interfaces with the anomaly detection system 800. For example, the anomaly validation manager 818 may receive the predicted anomalies and/or the predicted anomaly map generated by the anomaly detection system 800 (e.g., one of the anomaly detection manager 806 and/or the anomaly mapping manager 816).

In some embodiments, the anomaly validation manager 818 is configured to receive the predicted anomalies and/or the predicted anomaly map from the anomaly detection system 800 at different times. In some embodiments, the anomaly validation manager 818 includes a memory storing historical predicted anomalies (including pixelwise data thereof, including the locations, size, shape, and other information about the predicted anomalies) and/or the predicted anomaly map of the agricultural field 104 received from the anomaly detection system 800. For example, the anomaly validation manager 818 may receive initial predicted anomaly data including predicted anomalies and/or the predicted anomaly map from the anomaly detection system 800 at a first time (e.g., initial predicted anomalies, an initial predicted anomaly map of the agricultural field 104). In some embodiments, the initial predicted anomaly data is generated based on sensor data gathered by the UAV 112. In some embodiments, the initial predicted anomaly data based on sensor data gathered by the agricultural vehicle 102.

At a second time after the first time, the anomaly validation manager 818 may receive additional anomaly data from one or both of the anomaly detection and validation systems 214, 314 to validate the initial anomaly data and generate validated anomaly data including validated predicted anomalies and/or a validated anomaly map. In some embodiments, the UAV 112 may fly over the agricultural field 104 at a second time and receive sensor data of the agricultural field 104 at the second time. In some embodiments, the agricultural vehicle 102 traverses the agricultural field 104 at the second time and receives sensor data of the agricultural field 104 at the second time.

Based on the sensor data at the second time, the anomaly detection and validation system 214, 314 may generate additional predicted anomaly data (e.g., second predicted anomaly data), such as predicted anomalies and/or a predicted anomaly map of the agricultural field 104 at the second time, as described above (e.g., with one or more of (e.g., each of) the sensor data manager 802, the sensor data preprocessing manager 804, the anomaly detection manager 806, the data fusion manager 808, the segmentation manager 810, the classification manager 812, the anomaly localization manager 814, and the anomaly mapping manager 816).

The anomaly validation manager 818 may receive the initial predicted anomaly data (e.g., at the first time) and additional anomaly data (e.g., at the second time) and compare the initial predicted anomaly data to the additional predicted anomaly data to generate validated anomaly data. By way of non-limiting example, if the anomaly validation manager 818 determines that an anomaly was predicted at the first time and an anomaly was predicted at the same location in the agricultural field 104 at the second time, the anomaly validation manager 818 may validate the predicted anomaly. By way of comparison, if the anomaly validation manager 818 determines that a predicted anomaly was present in the agricultural field at the first time, but was not present at the same location in the agricultural field 104 at the second time, the anomaly validation manager 818 may not validate the predicted anomaly and/or may give the predicted anomaly a low confidence score.

In some embodiments, the anomaly validation manager 818 may validate predicted anomalies where the predicted anomaly has a size and/or shape that is substantially the same at the second time as at the first time and is located at the same location in the agricultural field 104. For example, where the size of a predicted anomaly is less than a predetermined threshold percentage different at the second time than at the first time, the anomaly validation manager 818 may validate the predicted anomaly.

In some embodiments, anomaly validation manager 818 compares the anomaly scores 516a-516c of the predicted anomalies at the first time to the anomaly scores 516a-516c of the predicted anomalies at the second time. If the anomaly scores 516a-516c at the second time are the same as or within a predetermined range of the anomaly scores 516a-516c at the first time, the anomaly validation manager 818 may validate the predicted anomalies.

In some embodiments, the anomaly validation manager 818 removes dynamic (e.g., moving) anomalies from the initial predicted anomaly data and the additional predicted anomaly data. In some embodiments, validating the one or more anomaly predictions with the anomaly validation manager 818 includes removing dynamic anomalies from the one or more anomaly predictions.

Accordingly, the anomaly validation manager 818 may receive initial predicted anomaly data of the agricultural field 104 from the anomaly detection system 800 of one or both of the anomaly detection and validation systems 214, 314 and may further receive additional predicted anomaly data of the agricultural field 104 from the anomaly detection system 800 of one or both of the anomaly detection and validation systems 214, 314. The anomaly validation manager 818 compares the initial predicted anomaly data to the additional predicted anomaly data to generate validated anomaly data.

With continued reference to FIG. 8, the anomaly detection and validation system 214, 314 may further include a validated anomaly mapping manager 820. The validated anomaly mapping manager 820 may receive the validated anomaly data from the anomaly validation manager 818 and generate a validated anomaly map. For example, the validated anomaly mapping manager 820 may update the predicted anomaly map (e.g., the initial predicted anomaly map) generated by the anomaly mapping manager 816.

In some embodiments, the validated anomaly mapping manager 820 generates a confidence score for each of the validated anomalies. The confidence score may be based on one or more of the match between the detected anomalies based on the initial sensor data and the additional sensor data, whether the initial detected anomaly was detected at the second time, whether the size of initially detected anomalies was the same or substantially the same (e.g., within at least about 90% the same; for example, if the initial anomaly had a cross sectional area or a volume of a first size, if the second anomaly had a size that was within a range of from about 90% to about 110% of the first size), or another match. The validated anomaly mapping manager 820 may generate bounding boxes of a different color to anomalies that are validated. In some embodiments, for anomalies that are not validated or have a low confidence score, the validated anomaly mapping manager 820 may not generate a bounding box or a heat map of such anomalies.

With continued reference to FIG. 8, the anomaly detection and validation system 214, 314 includes a display manager 822. In one or more embodiments, the display manager 822 generates one or more displays for the I/O device 332 associated with validated anomalies and/or the validated anomaly map. In some embodiments, the display manager 822 generates one or more displays for the I/O device 332 associated with the validated anomaly map that are located within a particular distance of the agricultural vehicle 102 as the agricultural vehicle 102 traverses the agricultural field 104. For example, once the anomaly validation manager 818 determines validated anomalies, the display manager 822 can generate a display that highlights the spatial distribution of the validated anomalies relative to one another and/or relative to the agricultural vehicle 102. In some embodiments, the display manager 822 can generate a display including the validated anomaly map. The display manager 822 may highlight the position of the validated anomalies relative to a current position of the agricultural vehicle 102, or relative to a path or route that the agricultural vehicle 102 is currently on. The display manager 822 can generate the display using highlight colors, bounding boxes, animations, or any other highlighting technique. Additionally, the display manager 822 can generate additional displays or alerts based on whether proximity between the agricultural vehicle 102 and any of the validated anomalies is less than a threshold amount. In at least one implementation, the display manager 822 can dynamically update the generated displays as the agricultural vehicle 102 moves through the agricultural field 104 relative to positions of the validated anomalies.

Additionally, in one or more implementations, the anomaly detection and validation system 214, 314 includes an agricultural vehicle safety system 824. In one or more embodiments, the agricultural vehicle safety system 824 can control operations of the agricultural vehicle 102 based on the validated anomalies within the agricultural field 104 relative to the agricultural vehicle 102. For example, in response to determining that a validated anomaly is within a threshold distance from the agricultural vehicle 102 or a threshold distance from a future position of the agricultural vehicle 102, the agricultural vehicle safety system 824 can control a wide range of operations in connection with the agricultural vehicle 102. To illustrate, the agricultural vehicle safety system 824 can one or more of cause the agricultural vehicle 102 to stop moving within the agricultural field 104, cause the agricultural vehicle 102 to slow down in the agricultural field 104, cause the agricultural vehicle 102 to deviate from a pre-planned route in the agricultural field 104, cause the agricultural vehicle 102 to halt operating a front implement of the agricultural vehicle 102 or a rear implement of the agricultural vehicle 102 (e.g., a boom sprayer, a thresher, etc.), cause the agricultural vehicle 102 to use an onboard signal tower to highlight areas of the agricultural field 104 corresponding to the validated anomalies; causing the agricultural vehicle 102 to flash onboard visual lights, or causing the agricultural vehicle 102 to sound a horn or other auditory system.

In additional implementations, the agricultural vehicle safety system 824 can transmit the validated anomalies and/or the validated anomaly map to a human operator, who then provides visual feedback and guidance for safe operation of the agricultural vehicle 102. In such implementations, the agricultural vehicle safety system 824 can additionally provide alerts or warnings to the operator when a dynamic anomaly enters a warning zone, a stop zone, an emergency zone, etc.

In some embodiments, the anomaly detection and validation system 214, 314 is in operable communication with an I/O device, which may correspond to, for example, an I/O device on the client device 114, the I/O device 232 of the UAV 112, and/or the I/O device 332 of the agricultural vehicle 102.

Thus, the anomaly detection and validation system 214, 314 provides a comprehensive solution for detecting anomalies, generating predicted anomalies, generating a predicted anomaly map, and validating the predicted anomalies and/or the predicted anomaly map in the agricultural field 104 using the GNSS unit 220, as well as spatial data from the one or more cameras 206, the one or more LiDAR units 208, and the one or more radar units 210. For example, the anomaly detection and validation systems 214, 314 provide a solution for generating a validated anomaly map. By validating the predicted anomalies and/or generating the validated anomaly map, the anomaly detection and validation systems 214, 314 facilitate accurate decision making by an operator or worker of the agricultural field 104, such as route planning and/or performance of one or more agricultural operations in the agricultural field 104.

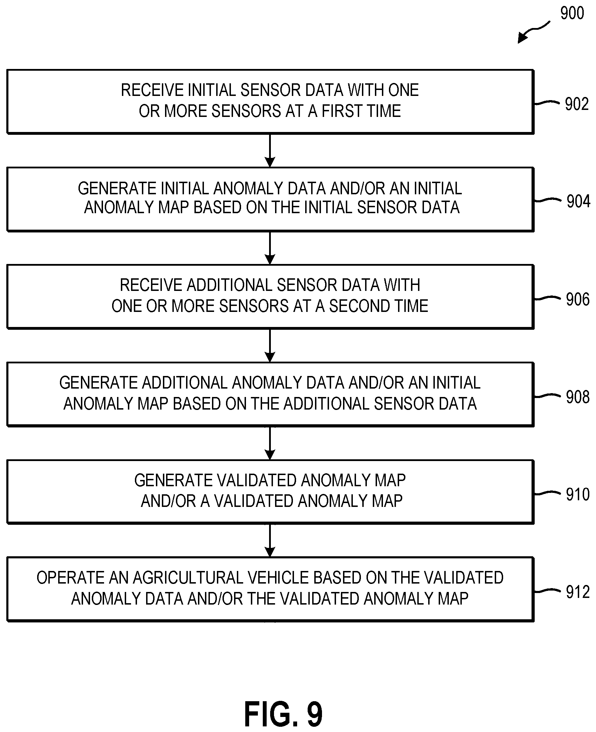

FIG. 9 is a simplified flow chart illustrating a method 900 of generating validated anomalies and/or a validated anomaly map, according to embodiments of the disclosure. The method 900 may include receiving initial sensor data with one or more sensors at a first time, as shown in act 902. The sensor data may be received by one or more cameras, one or more LiDAR units, one or more radar units, and a GNSS unit operably coupled to a UAV and/or an agricultural vehicle, as described above with reference to FIG. 8.

Responsive to receiving the initial sensor data, the method 900 may include generating initial anomaly data and/or an initial anomaly map based on the initial sensor data, as shown in act 904. The initial anomaly data and/or the initial anomaly map may be generated as described above with reference to the anomaly detection system 214, 314 with reference to FIG. 8.

The method 900 may further include receiving additional sensor data with one or more sensors at a second time, as shown in act 906. The additional sensor data may be received by one or more cameras, one or more LiDAR units, one or more radar units, and a GNSS unit operably coupled to a UAV and/or an agricultural vehicle, as described above with reference to FIG. 8. In some embodiments, the additional sensor data is received by additional sensors coupled to a UAV.

Responsive to receiving the additional sensor data, the method 900 may include generating additional anomaly data and/or an additional anomaly map based on the additional sensor data, as shown in act 908. The additional anomaly data and/or the additional anomaly map may be generated as described above with reference to the anomaly detection system 214, 314 with reference to FIG. 8.

Responsive to generating the additional anomaly data and/or the additional anomaly map, the method 900 may include generating validated anomaly data and/or a validated anomaly map, as shown in act 910. The validated anomaly data and/or the validated anomaly map may be generated using a validated anomaly mapping manager, as described with reference to FIG. 8.

The method 900 may further include operating an agricultural vehicle based on the validated anomaly data and/or the validated anomaly map, as shown in act 912. For example, a display of the agricultural vehicle may display the validated anomalies and/or the validated anomaly map to an operator of the agricultural vehicle, as described above. In some embodiments, based on the anomaly data and/or the validated anomaly map, the agricultural vehicle may be controlled.

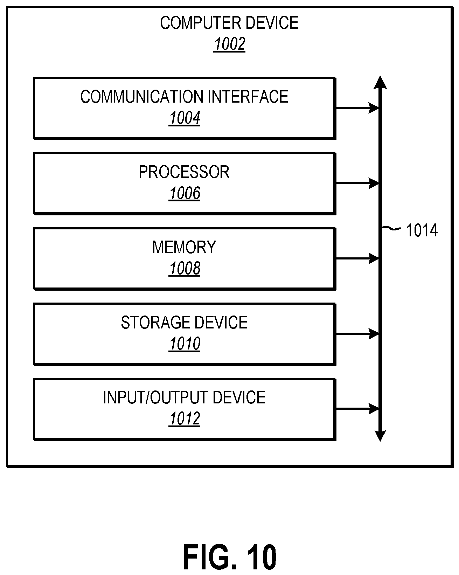

FIG. 10 is a schematic view of a computer device 1002, in accordance with embodiments of the disclosure. The computer device 1002 may correspond to the computing device 212, 312 (FIG. 2, FIG. 3). The computer device 1002 may include a communication interface 1004, at least one processor 1006, a memory 1008, a storage device 1010, an input/output device 1012, and a bus 1014. The computer device 1002 may be used to implement various functions, operations, acts, processes, and/or methods disclosed herein, such as the method 1000. In some embodiments, the bus 1014 (*e.g.*, a Controller Area Network (CAN) bus, an ISOBUS (ISO 11783 Compliant Implement Control)) may include hardware, software, or both that couples components of computer device 502 to each other and to external components.

The communication interface 1004 may include hardware, software, or both. The communication interface 1004 may provide one or more interfaces for communication (such as, for example, packet-based communication) between the computer device 1002 and one or more other computing devices or networks (e.g., a server). As an example, and not by way of limitation, the communication interface 1004 may include a network interface controller (NIC) or network adapter for communicating with an Ethernet or other wire-based network or a wireless NIC (WNIC) or wireless adapter for communicating with a wireless network, such as a Wi-Fi.

The at least one processor 1006 may include hardware for executing instructions, such as those making up a computer program. By way of non-limiting example, to execute instructions, the at least one processor 1006 may retrieve (or fetch) the instructions from an internal register, an internal cache, the memory 1008, or the storage device 1010 and decode and execute them to execute instructions. In some embodiments, the at least one processor 1006 includes one or more internal caches for data, instructions, or addresses. The at least one processor 1006 may include one or more instruction caches, one or more data caches, and one or more translation look aside buffers (TLBs). Instructions in the instruction caches may be copies of instructions in the memory 1008 or the storage device 1010.

The memory 1008 may be coupled to the at least one processor 1006. The memory 1008 may be used for storing data, metadata, and programs for execution by the processor(s). The memory 1008 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 1008 may be internal or distributed memory.

The storage device 1010 may include storage for storing data or instructions. As an example, and not by way of limitation, storage device 1010 may include a non-transitory storage medium described above. The storage device 1010 may include a hard disk drive (HDD), Flash memory, an optical disc, a magneto-optical disc, magnetic tape, or a Universal Serial Bus (USB) drive or a combination of two or more of these. The storage device 1010 may include removable or non-removable (or fixed) media, where appropriate. The storage device 1010 may be internal or external to the storage device 1010. In one or more embodiments, the storage device 1010 is non-volatile, solid-state memory. In other embodiments, the storage device 1010 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 1010 may include machine-executable code stored thereon. The storage device 1010 may include, for example, a non-transitory computer-readable storage medium. The machine-executable code includes information describing functional elements that may be implemented by (e.g., performed by) the at least one processor 1006. The at least one processor 1006 is adapted to implement (e.g., perform) the functional elements described by the machine-executable code. In some embodiments the at least one processor 1006 may be configured to perform the functional elements described by the machine-executable code sequentially, concurrently (e.g., on one or more different hardware platforms), or in one or more parallel process streams.

When implemented by the at least one processor 1006, the machine-executable code is configured to adapt the at least one processor 1006 to perform operations of embodiments disclosed herein. For example, the machine-executable code may be configured to adapt the at least one processor 1006 to perform at least a portion or a totality of the method 900 of FIG. 9. As another example, the machine-executable code may be configured to adapt the at least one processor 1006 to perform at least a portion or a totality of the operations discussed for the anomaly detection systems 214, 314, and/or the anomaly detection and validation system 214, 314. As a specific non-limiting example, the machine-executable code may be configured to adapt the at least one processor 1006 to cause the UAV 112 to generate anomaly data, validated anomaly data, validated anomaly data, and/or a validated anomaly map.

As a specific, non-limiting example, the machine-executable code may be configured to adapt the at least one processor 1006 to cause the I/O device 332 of the agricultural vehicle 102 to display surroundings of the agricultural vehicle including a validated anomaly map and/or validated anomalies, as described above. In another non-limiting example, the machine-executable code may be configured to adapt the at least one processor 1006 to cause the agricultural vehicle 102 to perform at least one navigation operation, as described above with reference to the method 900 of FIG. 9.

The input/output device 1012 may allow an operator of the agricultural vehicle 102 and/or the UAV 112 to provide input to, receive output from, the computer device 1002. The input/output device 1012 may include a mouse, a keypad or a keyboard, a joystick, a touch screen, a camera, an optical scanner, network interface, modem, other known I/O devices, or a combination of such I/O interfaces.

In some embodiments, the bus 1014 (*e.g.*, a Controller Area Network (CAN) bus, an ISOBUS (ISO 11783 Compliant Implement Control)) may include hardware, software, or both that couples components of computer device 1002 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. A method of operating an agricultural vehicle, the method comprising:
at a first time, receiving global navigation satellite system data from one or more global navigation satellite system units coupled to an unmanned aerial vehicle traveling above an agricultural field;
at the first time, receiving first sensor data of the agricultural field from one or more first sensors coupled to the unmanned aerial vehicle;
synchronizing the first sensor data across one or more global navigation satellite system time references;
applying an anomaly detection deep neural network to the synchronized first sensor data to generate first predicted anomaly data;
at a second time, receiving second sensor data of the agricultural field from the one or more first sensors or from one or more second sensors coupled to the agricultural vehicle;
applying the anomaly deep neural network to the second sensor data to generate second predicted anomaly data; and
validating the first predicted anomaly data with the second predicted anomaly data to generate at least one of validated anomalies or a validated anomaly map.

2. The method of claim 1, further comprising controlling one or more operations of the agricultural vehicle based on the at least one of validated anomalies or a validated anomaly map.

3. The method of claim 2, wherein controlling one or more operations of the agricultural vehicle comprises one or more of:
causing the agricultural vehicle to stop moving in the agricultural field;
causing the agricultural vehicle to slow down in the agricultural field;
causing the agricultural vehicle to deviate from a pre-planned route in the agricultural field;
causing the agricultural vehicle to halt operating a front implement of the agricultural vehicle or a rear implement of the agricultural vehicle;
causing the agricultural vehicle to use an onboard signal tower to highlight one or more of the validated anomalies;
causing the agricultural vehicle to flash onboard visual lights; or
causing the agricultural vehicle to sound a horn or other auditory system.

4. The method of claim 3, wherein receiving first sensor data of the agricultural field from one or more first sensors coupled to the unmanned aerial vehicle comprises receiving at least one of LiDAR data from one or more LiDAR units, image data from one or cameras, or radar data from one or more radar units coupled to the unmanned aerial vehicle.

5. The method of any one of claims 1 through 4, wherein applying an anomaly detection deep neural network to the synchronized first sensor data to generate first predicted anomaly data comprises generating an input vector based on the global navigation satellite system data and the first sensor data synchronized across the one or more global navigation satellite system time references.

6. The method of claim 5, wherein applying an anomaly detection deep neural network to the synchronized first sensor data to generate first predicted anomaly data comprises applying the anomaly detection deep neural network to the input vector to generate the first predicted anomaly data.

7. The method of any one of claims 1 through 6, wherein applying an anomaly detection deep neural network to the synchronized first sensor data to generate first predicted anomaly data comprises applying the anomaly detection deep neural network to the synchronized first sensor data to generate at least one of one or more first anomaly predictions or a first anomaly map.

8. The method of any one of claims 1 through 7, wherein validating the first predicted anomaly data with the second predicted anomaly data to generate at least one of validated anomalies or a validated anomaly map comprises generating a validated anomaly map.

9. The method of claim 8, further comprising displaying the validated anomaly map on a display of the agricultural vehicle.

10. The method of any one of claims 1 through 9, wherein validating the first predicted anomaly data with the second predicted anomaly data to generate at least one of validated anomalies or a validated anomaly map comprises validating anomalies in the first anomaly data when the second anomaly data includes a corresponding anomaly in the second anomaly data at a same location in the agricultural field an anomaly in the first anomaly data.

11. The method of any one of claims 1 through 10, wherein validating the first predicted anomaly data with the second predicted anomaly data comprises removing dynamic anomalies from the first anomaly data and the second anomaly data.

12. The method of any one of claims 1 through 11, wherein receiving second sensor data comprises receiving the second sensor data with the second sensors coupled to the agricultural vehicle as the agricultural vehicle traverses the agricultural field.

13. A system for generating and validating an anomaly map of an agricultural field, the system comprising:
an unmanned aerial vehicle comprising:
one or more first sensors configured to receive image data or LiDAR data of the agricultural field; and
a first global navigation satellite system receiver;
an agricultural vehicle, comprising:
one or more second sensors configured to receive image data or LiDAR data of the agricultural field; and
a second global navigation satellite system receiver; and
an anomaly detection and validation system operably coupled to each of the unmanned aerial vehicle and the agricultural vehicle, the anomaly detection and validation system comprising:
at least one processor; and
at least one non-transitory computer-readable storage medium having instructions thereon that, when executed by the at least one processor, cause the anomaly detection and validation system to:
at a first time, receive first sensor data of the agricultural field from the one or more first sensors;
apply an anomaly detection deep neural network to the first sensor data to generate first predicted anomaly data;
at a second time, receive second sensor data of the agricultural field from the one or more first sensors or the one more second sensors;
apply the anomaly deep neural network to the second sensor data to generate second predicted anomaly data; and
validate the first predicted anomaly data with the second predicted anomaly data to generate at least one of validated anomalies or a validated anomaly map.

14. The system of claim 13, further comprising instructions that, when executed by the at least one processor, cause the anomaly detection and validation system to generate the validated anomaly map.

15. The system of claim 13 or claim 14, wherein the instructions cause the anomaly detection and validation system to validate the first predicted anomaly data with the second anomaly predicted data by comparing the first predicted anomaly data to the second predicted anomaly data.
